# EUROPEAN PATENT APPLICATION

(11) **EP 3 949 814 A1**
(43) Date of publication of application: **09.02.2022**
(21) Application number: 21183191.2
(22) Date of filing: 01.07.2021
(51) Int. Cl.: A47J 36/10, A47J 43/07

(54) **LID FOR A BOWL OF A FOOD PROCESSING APPLIANCE**

(30) Priority: 30.07.2020 DE 102020209670
(71) Applicant: BSH Hausgeräte GmbH, 81739 München (DE)
(72) Inventor: Brecko, Ales, 3000 Celje (SI); Holcinger, Tadej, 3220 Store (SI); Pesec, Jurij, 3301 Petrovce (SI)

(57) **Abstract**

The present invention relates to an appliance for a food processor with a lid (1) to be mounted onto a bowl (13) and a locking mechanism securing the lid on that bowl. To facilitate a secure positioning of the lid (1) on that bowl (3) there is a lock provided between lid (1) and bowl (13) having a latch (8) that is spring-loaded e.g. with a coil spring (10). The lock with this latch (8) can be opened e.g. by a pushbutton (7).

## Description

### AREA OF THE INVENTION

The present invention relates to an appliance for a food processor with a lid to be mounted onto a bowl and a locking mechanism securing the lid on that bowl.

### STATE OF THE ART

Food processors for households are generally known. They usually are provided with a bowl within that a tool for the food processing is rotated by an electric motor of said food processor. Instead of a bowl the food processor as well can be provided with a jug. For the present application the term bowl therefore shall include jugs etc. The tool of the food processor can either be a kneading hook for e.g. kneading dough or a blender knife or a grater or the like.

Because of the rotating tool it is for safety reasons desirable that the bowl is covered by a lid.

To ensure that the lid is not easily removed it is known to lock the lid to a bowl with a kind of bayonet system requiring first the vertical motion of the lid onto the bowl and afterwards a circular motion to lock this system. This handling is considered to be cumbersome due to the two different motions that are necessary, i.e. a vertical movement and a turning movement.

Another way of locking the lid to a bowl is by using clamps that are either fixed to the lid or to the bowl. Usually such clamps are mounted at hinges and after the lid is positioned on the bowl they have to be manually moved into their clamping position.

This methods to lock a lid to a bowl is as well considered to be relative cumbersome as again a number of actions are necessary to securely fix the lid on the bowl.

### SUBJECT OF THE INVENTION

Accordingly the subject of the present invention is to provide a solution so that the lid can be easily mounted to a bowl and being fixed there.

### SUMMARY OF THE INVENTION

To achieve the subject of the present invention it is proposed to provide a lock between lid and bowl that has at least one spring-loaded latch.

The advantage of the invention is that due to the spring-load of its latch the provided lock works automatically when the lid is placed on the bowl. Furthermore a "click"-sound is audible to the user indicating the firm locking of the lid on the bowl.

### PREFERRED EMBODIMENTS OF THE INVENTION

Preferred embodiments with features that can be used either alone or in combination with each other are subject of the dependent claims. Any reference numbers in the claims are considered to be not restrictive but intended only to improve the legibility of the claims.

With a first embodiment of the invention the latch is situated at the lid and opened by a pushbutton. This construction facilitates handling of the lid when removing it from the bowl as the pushbutton can be pushed and the lid lifted off the bowl in one step.

With a preferred embodiment there is a first chamfered region at the front end of said spring loaded latch that cooperates with a bulged region at the edge of the bowl when the lid is put onto said bowl. This construction allows the autonomous working of the lock when the lid is put onto the bowl as the latch is pushed back during this movement against its spring load that is provided by a coil spring. After the latch has passed said bulged region at the bowl's upper end it springs forward again and thus locks the lid in a secure manner.

Furthermore there can be a second chamfered region at an upwardly directed side of the latch that cooperates with a downwardly directed activating section of the pushbutton. This construction allows a reliable opening of the latch by pushing the pushbutton down and thus withdrawing the latch from its position locking the lid on the bowl.

With a second embodiment of the invention the latch is situated on a lever that is swivel mounted on a connecting axis at the bowl.

This construction has the advantage that the connecting axis can be positioned at the outside of the bowl so that the inner walls of the bowl can remain smooth and thus easy to clean.

With a preferred mode of this embodiment the lever is spring-loaded by a torsion spring preferably situated on said connecting axis. This preferred design has the advantage of minimising the number of parts to be assembled and to facilitate this assembling.

It furthermore is proposed to connect the lever with a handle being as well arranged at said connecting axis.

Such a handle facilitates handling of the bowl e.g. when removing it from the food processor for emptying or cleaning.

It is proposed to have the handle to cooperate with the lever to disengage the latch. Like this the number of separate parts is further reduced what facilitates the assembly of the appliance. Furthermore this gives the possibility to construct the appliance from a smaller number of parts so that it can be produced cheaper.

### SHORT DESCRIPTION OF THE DRAWINGS

Further features and advantages of the present invention can be learned from the following description of the figures that show preferred embodiments but shall not be understood as being limiting for the present application.
- Fig. 1: perspective view of a lid with pushbuttons;
- Fig. 2: first perspective sectional view of a pushbutton;
- Fig. 3: second perspective sectional view of a pushbutton;
- Fig. 4: perspective view of a lid with a latch on a lever.

### DETAILED DESCRIPTION OF THE DRAWINGS

In the following description of preferred embodiments same reference numbers are used for same parts.

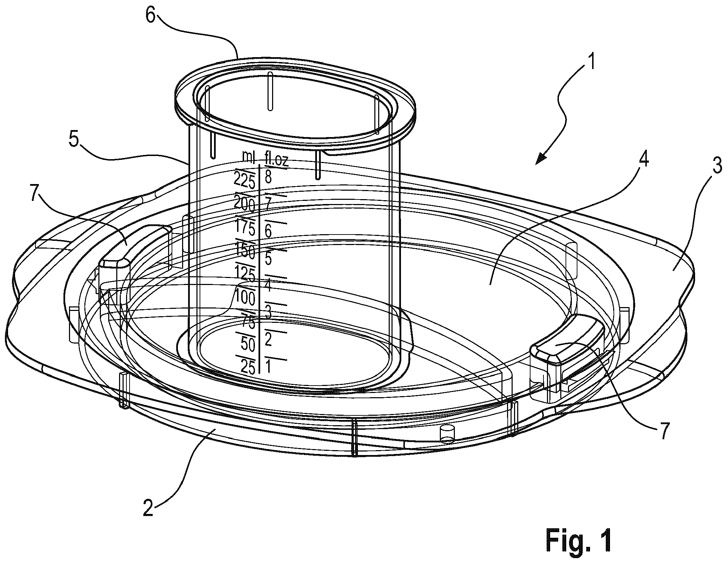

In figure 1 is shown a lid 1 to be placed on a bowl of an appliance for a food processor. Instead of a bowl a jug or the like can be used. The lid 1 has a substantially circular form and has a circular ring 2 formed at its underside. This ring 2 is connected at its upper end with a horizontal rim 3 extending outwardly.

The middle part of the lid 4 being surrounded by the horizontal rim 3 and the circular ring 2 is mainly flat and horizontal and carries a chute 5 extending vertically. The chute 5 corresponds to a pushing plug 6 in that the outer form of the plug 6 is about the same form as the inner form of chute 5.

Into the ring 2 close to the circumference of the lid 1 are integrated two pushbuttons 7 that can be pushed down as is explained later.

The chute 5 and the pushing plug 6 are provided to fill material into the bowl. In the inner volume of the bowl rotates a tool, e.g. a blender knife or a dough hook or a grater etc.

These rotating tools can whirl the filled in material and it is necessary to keep the bowl properly closed so that the filled in material is not spilled. Therefore it is common to fix the lid on the bowl.

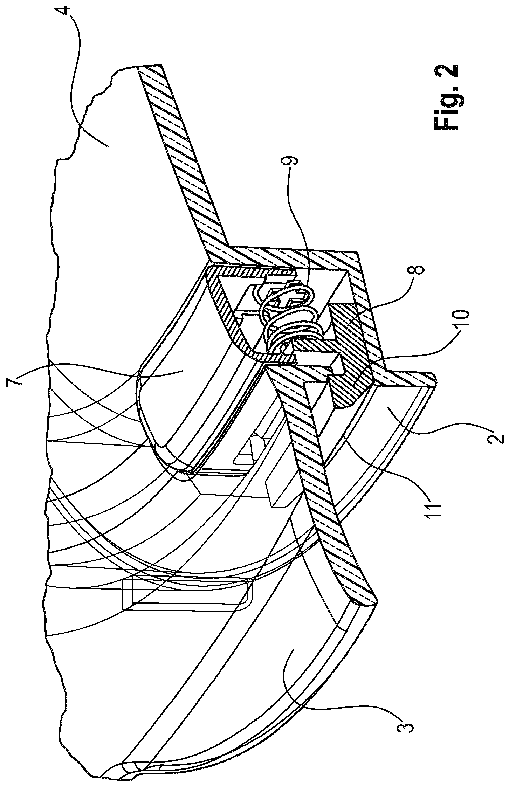

To secure the lid 1 on the bowl it is provided with a lock as can be seen in figure 2. This lock provides a latch 8 that is spring-loaded by a coil spring 9.

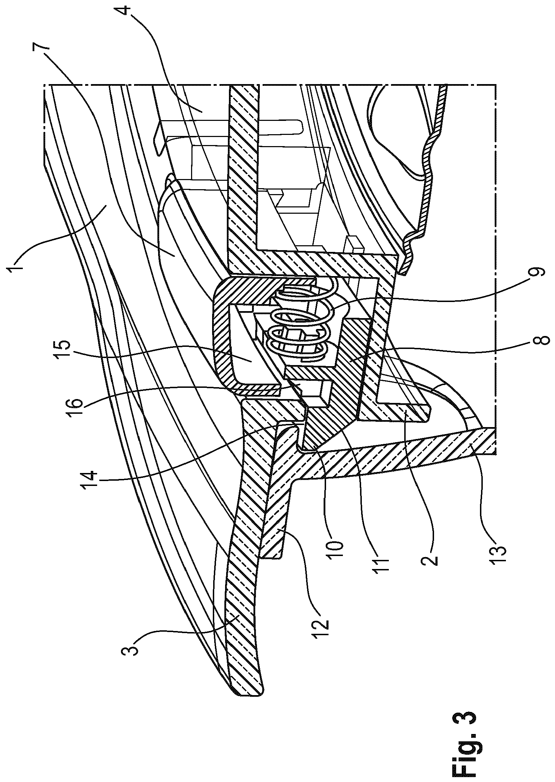

The latch 8 has at its front edge 10 a first chamfered region 11. This chamfered region 11 cooperates with the upper edge 12 of the bowl 13 as can be seen in figure 3: This edge 12 is formed with a bulge. When the lid is put onto the bowl the edge 12 comes into contact with the chamfered region 11 and thus pushes back the latch 8. After the latch 8 has passed the edge 12 it is pushed forward again by the coil spring 9 so that the upper side of the latch 8 hooks under the edge 12 that extends with its bulge radially inwardly. Like this the lid is securely hold on the edge 12 of bowl 13.

The forward movement of the latch 8 under the edge 12 is accompanied by a "click"-sound that gives the user of the appliance an acoustic feed-back that the lid is properly locked on the bowl.

To open the lock the pushbutton 7 is pushed down. The pushbutton 7 is provided with a downwardly directed activating section 15. This activating section 15 cooperates with a second chamfered region 16 at the upwardly directed side of the latch 8 so that the latch 8 is moved back against the coil spring 9 when the pushbutton is pushed down. Like this the front edge 10 of latch 8 is withdrawn from under the bulge at the upper edge 12 of bowl 13 so that the lid 1 can be lifted off the bowl again.

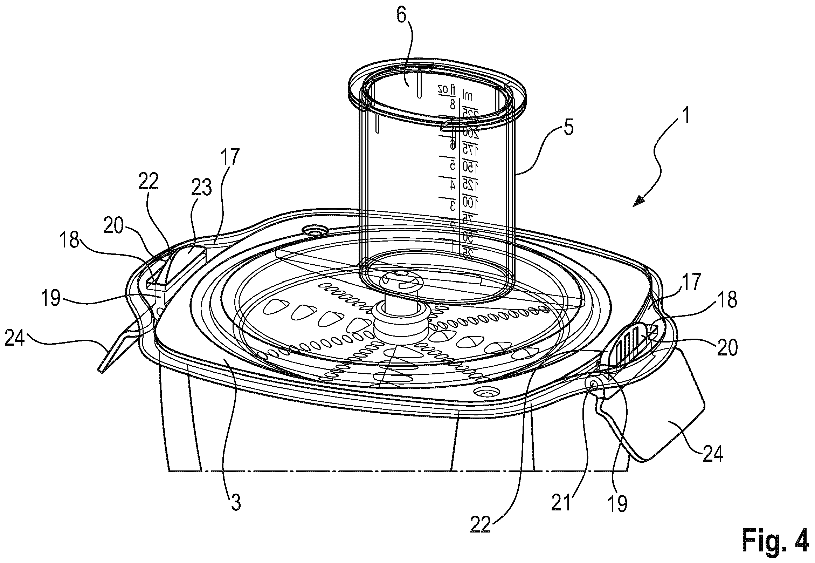

In figure 4 there is shown a different embodiment of the invention.

In this case the tool within the appliance is a grater. But it shall be understood that this is only an example and any other tool as discussed above is possible as well.

In this case the lid has extensions 17 at its circumference with in that rectangular holes 18 are provided. Through these holes 18 protrude levers 19 with latches 20. These latches 20 are mounted on a connecting axis 21 that is attached to the side of the bowl 13. In this embodiment the latch 20 is spring-loaded by a torsion spring.

As can be seen in figure 4 the latches 20 are provided at their front edges 22 with chamfered regions 23. When putting the lid 1 on the bowl 13 the rectangular holes 18 are guided over the latches 20 so that the edge of the rectangular holes 18 moves along this chamfered region 23 of the latches 20. After lid 1 has passed the chamfered regions 23 of the latches 20 these latches 20 are pushed back again into their original position by the mentioned torsion springs to hook over the lid 1, like this locking it and keeping it in place. The forward movement of the latches 20 on the levers 19 is accompanied as well by a "click"-sound that again gives a use an acoustic feedback to indicate the proper locking of the lid 1 on the bowl 13.

In this second embodiment the latches 20 cooperate with handles 24 that as well are mounted on the connecting axis 21. By pushing the handles 23 inwardly in the direction towards the bowl 13 the levers 19 with the latches 20 are moved in the opposite direction. Thus the locked lid is unlocked by moving the latches 20 into a position so that the lid 1 can be lifted off the bowl with the holes 18 can pass the latches 20.

On the other hand the handles 24 are blocked against a swivelling movement to the outside so that when holding the bowl one on these handles it is possible to lift the bowl e.g. off a motor block.

In total the invention improves the handling of a lid for a bowl or appliance of a food processor.

### LIST OF REFERENCE NUMBERS

- 1: lid
- 2: circular ring
- 3: horizontal rim
- 4: flat middle part
- 5: chute
- 6: pushing plug
- 7: pushbutton
- 8: latch
- 9: coil spring
- 10: front edge
- 11: first chamfered region
- 12: edge
- 13: bowl
- 14: upper side
- 15: activating section
- 16: 2nd chamfered region
- 17: extensions
- 18: holes
- 19: lever
- 20: latch
- 21: axis
- 22: front edge
- 23: chamfered region
- 24: handle

## Claims

1. Appliance for a food processor with a lid (1) to be mounted onto a bowl (13) and a locking mechanism securing the lid (1) on that bowl (13),
**characterised in that**
there is a lock provided between lid (1) and bowl (13) having s spring-loaded latch (8; 20)

2. Appliance according to claim 1,
**characterised in that**
the latch (8) is situated at the lid (1) and is opened by a pushbutton (7).

3. Appliance according to claim 2,
**characterised in that**
there is a first chamfered region (11) at the front edge (10) of the latch (8) that cooperates with the bulged edge (12) of the bowl (13).

4. Appliance according to one or more of the claims above,
**characterised in that**
there is a second chamfered region (16) at an upwardly directed side (14) of the latch (8) that cooperates with a downwardly directed activating section (15) of the pushbutton (7) .

5. Appliance according to claim 1,
**characterised in that**
the latch (20) is situated on a lever (19) that is swivel mounted on a connecting axis (21) at the bowl (13).

6. Appliance according to claim 5,
**characterised in that**
the lever (19) is spring-loaded by a torsion spring situated on said connecting axis (21).

7. Appliance according to one or more of claims 5 and 6,
**characterised in that**
the lever (19) is connected with a handle (24) being arranged at said connecting axis (21)

8. Appliance according to claim 7,
**characterised in that**
the handle (24) cooperates with the lever (19) to disengage the latch (20).
